# EUROPEAN PATENT SPECIFICATION

(11) **EP 2 729 024 B1**
(45) Date of publication and mention of the grant of the patent: **30.09.2015**
(21) Application number: 12741152.8
(22) Date of filing: 05.07.2012
(51) Int. Cl.: A23N 12/10, B65D 81/34, A47J 37/04, A23F 5/04

(54) **CONTAINER, SYSTEM AND METHOD FOR HEATING FOODSTUFFS**
BEHÄLTER, SYSTEM UND VERFAHREN ZUM AUFWÄRMEN VON LEBENSMITTELN
CONTENANT, SYSTÈME ET PROCÉDÉ POUR CHAUFFER DES PRODUITS ALIMENTAIRES

(30) Priority: 07.07.2011 US 201161505447 P; 11.10.2011 US 201161545741 P
(43) Date of publication of application: 14.05.2014
(73) Proprietor: Nuroast, Inc., Castroville, California 95012 (US)
(72) Inventor: Poss, Glen, Nine Mile Falls, Washington 99026 (US); Deitch, Patrick, New York, New York 10032 (US); Christensen, Dale, T., Castroville, California 95012 (US)
(74) Representative: Viering, Jentschura & Partner Patent- und Rechtsanwälte
(86) International application number: PCT/US2012/045589
(87) International publication number: WO 2013/006718

(56) References cited:
- WO-A1-01/92134
- GB-A- 2 071 480
- JP-A- 2 171 144
- US-A- 4 171 066
- US-A- 5 919 390
- US-A1- 2005 238 767

## Description

### BACKGROUND

### Technical Field

The subject matter described herein relates to containers, systems and methods for heating foodstuffs in such containers, for example, containers, systems, and methods for roasting plant matter, such as seeds.

### Description of the Related Art

Coffee is the world's most popular beverage, after water, with an estimated 400 billion or more cups consumed annually. Recent years have seen an explosion of interest in gourmet coffee products and the interest has not be limited to the purchase of coffee beverages from vendors who prepare the beverage on premise and purvey it to consumers over the counter. The interest has extended to achieving the ultimate in freshness and flavor by roasting coffee beans just prior to grinding and brewing in a coffee shop or at home.

Coffee roasting is a two-stage process. The outside of a coffee bean is covered with a husk, which also follows a fold into the center of the bean. As the bean is roasted, it expands and literally "pops" to shed the outer husk. This is commonly referred to as the first stage of the roasting process. Roasting of the bean after the first pop is commonly referred to as the second stage.

Currently coffee beans are roasted using two common methods and a third less common method. The common roasting methods heat the beans by convection and conduction. Convection roasting uses a heated air stream to heat the bean and "float" it in the airstream to reduce burning; however, this heated airstream also promotes the evaporation of a large amount of the oils that are vital components in the flavor of superior coffee. Conduction roasting utilizes heat from an externally heated metal drum to roast the bean through direct contact between the bean and the hot metal drum. The conduction method rotates the drum to agitate the beans so they are not scorched. The conduction method uses air that is circulated in the drum to remove heat and smoke, and results in loss of oils and their flavor just as in the convection system.

Another method of roasting beans uses steam as described in U.S. Patent No. 5,681,607 issued on October 28, 1997 to Maki, et al. Roasting coffee beans with superheated steam, however, tends to make the resulting coffee sour. The steam process uses a high-pressure vessel and high steam temperatures and pressures, resulting in a system that is potentially dangerous for the home and commercial user. Steam systems alone cannot provide the dark and very dark roasts that are often desired by much of the coffee-drinking public. Various embodiments of these existing methods for roasting coffee beans use "latent" steam in combination with convection and conduction heating to provide a full spectrum of roasting levels. Latent steam is a result of the water that is contained in the coffee beans (generally 10%-12% by weight) and is vaporized out of the bean during the initial convection/conduction heating that is part of the roasting process.

US Patent Application 2005/238767 discloses a container for storing green coffee beans and intended to be used in a microwave oven for roasting the beans. The pulp material forming the container walls acts as a filter during heating.

GB Patent Application 2071480 discloses a container for roasting coffee beans in a microwave oven. The container includes an agitation member.

Other problems encountered when roasting coffee beans include roasting a bean at too low a temperature, causing the vaporized moisture buildup to be sufficiently slow so as to allow the vapor to escape without building up sufficient pressure to pop the husk of the bean. When this occurs, the roasted bean tends to be of a smaller size than if properly roasted and has an undesirable green, grassy flavor. On the other hand, if a bean is roasted at too high a temperature, the bean will be burned, *i.e.,* overly caramelized, and taste will suffer. In some cases, high-temperature roasting results in burning of the husk. As the husk serves as a moisture barrier allowing pressure to build up during roasting, the burning of the husk destroys the moisture barrier and allows the moisture to escape without building up sufficient pressure to pop the husk. The second stage of roasting occurs once the bean has popped. After the bean has popped, heating the oil within the bean results in chemical changes that affect the taste of coffee brewed from the ground bean. In many instances, continued roasting of the bean after popping occurs, causing a further expansion of the bean. To achieve optimum roasting, it is necessary that the beans be uniformly heated internally while not allowing any of the oils and essences that are components of the flavor to escape into the air prior to grinding. If the heating is not uniform, some of the beans may pop early in the roasting process and others not at all. Consequently, uniform flavor cannot be obtained. Similarly, it is necessary that roasting temperature be properly controlled to assure proper flavor development which cannot occur if the roasting temperature is either too high or too low.

Other common problems with existing coffee roasters are the production of smoke and excess aroma. The smoke and excess aroma are often dealt with by commercial roasters by using stack scrubbers and afterburners. On the home roasting front, the problem is dealt with by recommended use outdoors. Other challenges faced by existing roasters are the high energy cost per pound of beans using either gas or electricity as the energy source.

To address the desire of certain coffee drinkers to brew the "best" cup of coffee possible, devices are available which utilize capsules of ground coffee in amounts sufficient to brew a single serving of coffee. While these devices have met with commercial success, they suffer from the drawback that once green beans are roasted, the properties of the roasted bean which contribute to the quality of the coffee brewed from the roasted bean begin to deteriorate. For example, heat, light, humidity and oxygen all accelerate the deterioration of roasted coffee by promoting the evaporation of oils or damaging the oils.

In addition to in-home devices for brewing single servings of coffee, there also exist coffee bean roasters that are designed for in-home use. These roasters utilize different types of heating techniques, including fluidized beds using hot air, drum roasters relying upon radiant heat and conduction. Many of these home roasters are designed to roast a volume of beans sufficient for more than a single serving. If such beans are used immediately, deterioration of the beans is less of an issue compared to if the roasted beans are stored for some time before they are used to brew a cup of coffee. For those consumers interested in the ultimate cup of coffee, there are limited options with respect to roasting a volume of beans sufficient to brew a single serving of coffee without roasting an excess of beans that require storage.

Induction heating is a process of heating an electrically conducting object (usually a metal) by electromagnetic induction, whereby eddy currents (also called Foucault currents) are generated within the metal and resistance of the metal leads to Joule heating of the metal. An induction heater typically consists of an electromagnet, through which a high-frequency alternating current is passed. In induction heating, heat may also be generated by magnetic hysteresis losses in materials that have significant relative permeability. The frequency of the alternating current used in an induction heating process depends on the size of the object, the material of the object, coupling between an induction coil and the object to be heated, and the penetration depth. Induction heating is utilized in cooking appliances. For example, cooktops of a stove are provided with an induction coil and heat an iron-containing base of cookware. The heat induced in the cookware base is transferred to the food via conduction. Benefits of induction cookers include efficiency, safety because the induction cooktop itself is not heated, and speed.

With the continued interest in the "perfect" cup of coffee, connoisseurs would find a single-serving coffee bean roaster desirable because, among other things, such a device would allow a home user to choose from a large variety of coffee beans from different origins, custom roast the beans for each individual cup of coffee, avoid wasting coffee beans, and avoid the deterioration in the roasted coffee beans as a result of the need to store the beans before grinding and brewing.

### BRIEF SUMMARY

Containers for storing a foodstuff prior to heating the foodstuff in the container, systems for heating the foodstuff-containing containers, and methods of heating the foodstuff in the container are described in the present disclosure. The described containers can store a single serving of a foodstuff for an extended period of time prior to heating the foodstuffs for consumption. Examples of foodstuffs which can be stored in the containers include plant matter, such as seeds. Exemplary seeds include green coffee beans and nuts. Other types of foodstuffs include consumable fluids. In embodiments of a system for heating a foodstuff-containing container described in the present disclosure, the system includes an induction coil for producing a magnetic field that is utilized to inductively heat the container. The foodstuffs in the container are then heated by conduction between the container wall and the foodstuff. In embodiments of a method for heating foodstuff in a container described in the present disclosure, a container containing the foodstuff is inductively heated. Methods for distributing a foodstuff packaged in a container to a customer are also described in the present disclosure. In an embodiment of a method for distributing foodstuffs packaged in a container described in the present disclosure, the foodstuff is packaged in a container that includes an agitation member and filter media.

An embodiment of a container for storing a foodstuff prior to heating the foodstuff in the container described herein includes a body in the shape of a hollow cylinder and a first closed end and a second closed end opposite the first closed end. The container further includes a filter media within the body between the first closed end and the second closed end and an agitation member within the body.

In one embodiment of a system for heating a container containing a foodstuff described in the present disclosure, the system includes a housing, an induction coil in the housing, and a receptacle within the housing configured to receive a container and position the container adjacent the induction coil. The container is heated inductively by the induction coil and a source of coolant is provided within the housing for cooling the container. The system also includes a motor connected to the receptacle for rotating the receptacle during the heating process.

In one embodiment of a method for distributing a foodstuff packaged in a container described in the present disclosure, the method includes providing a container for packaging the foodstuff. The container includes a body in the shape of a hollow cylinder and includes a closed end and an open end opposite the closed end. A filter media is provided within the body between the closed end and the open end and a bulkhead is located between the filter media and the open end. The bulkhead carries an agitation member and separates the container into a filtering section and a heating section. The method further includes the step of inserting a foodstuff into the container, attaching a lid to the open end and distributing the container to the customer.

In an embodiment of a method of roasting seeds described in the present disclosure, the method includes the steps of obtaining a container containing seeds. The container including a body in the shape of a hollow cylinder and including a first closed end and a second closed end opposite the first closed end. The container further includes a filter media within the body between the first closed end and the second closed end and a bulkhead located between the filter media and the second closed end. The bulkhead carries an agitation member and separates the container into a filtering section containing the filter media and a heating section. The method further includes the step of inductively heating the container to raise the temperature of the container.

### BRIEF DESCRIPTION OF THE SEVERAL VIEWS OF THE DRAWINGS

Figure 1A is a perspective view of a container for foodstuff according to one embodiment of the present disclosure;
Figure 1B is an exploded perspective view of the container of Figure 1A;
Figure 2 is a cross-section view taken along line 2-2 in Figure 1A;
Figure 3 is a perspective view of a system for heating a container containing foodstuff according to one embodiment of the present disclosure;
Figure 4 is a perspective view of the system of Figure 3 with a portion of the housing removed to reveal components within the housing;
Figure 5 is a cross-section view taken along line 5-5 in Figure 4;
Figure 6 is a cross-section view taken along line 6-6 in Figure 5;
Figure 7 is a side view of a portion of the system illustrated in Figure 3 with a pivoting bulkhead positioned in an open position;
Figure 8 is a plan view of a receptacle according to one embodiment of the present disclosure;
Figure 9 is a cross-section view along line 9-9 in Figure 8;
Figure 10 is a cross-section view of the receptacle along line 9-9 in Figure 8 with a cross section of the bottom of a container;
Figure 11 is a cross section of the receptacle along line 9-9 in Figure 8 with the container seated within the receptacle;
Figure 12 is a cross section of an embodiment employing a pouch to contain the foodstuff;
Figure 13A is a schematic cross-section of an embodiment of a roasting system including a hollow drive shaft to vent gases from the container;
Figure 13B is a cross-section view hollow shaft and receptacle of the embodiment shown in Figure 13A;
Figure 14A is cross-section of an embodiment of a container having agitation members formed into the container wall;
Figure 14B is a cross-section of another embodiment of an agitation member press-fit into a container;
Figure 15 is a side view of the agitation member of Figure 14B;
Figure 16A is a bottom plan view of an alternative embodiment of a container including axial gas vents;
Figure 16B is a cross-section along line B - B in Figure 16A;
Figure 17A is a cross-section of an alternative embodiment of a container including a fluted gas vent, receptacle and motor;
Figure 17B is a bottom plan view of the container of Figure 17A; and
Figure 18 is a front plan view of the receptacle of Figure 17A.

### DETAILED DESCRIPTION

In the following description, certain specific details are set forth in order to provide a thorough understanding of various aspects of the disclosed subject matter. However, the disclosed subject matter may be practiced without these specific details. In some instances, well-known structures and methods of forming the structures associated with the containers and systems comprising embodiments of the subject matter disclosed herein have not been described in detail to avoid obscuring the descriptions of other aspects of the present disclosure.

Unless the context requires otherwise, throughout the specification and claims that follow, the word "comprise" and variations thereof, such as "comprises" and "comprising" are to be construed in an open, inclusive sense, that is, as "including, but not limited to."

Reference throughout the specification to "one embodiment" or "an embodiment" means that a particular feature, structure, or characteristic described in connection with the embodiment is included in at least one embodiment. Thus, the appearance of the phrases "in one embodiment" or "in an embodiment" in various places throughout the specification are not necessarily all referring to the same aspect. Furthermore, the particular features, structures, or characteristics may be combined in any suitable manner in one or more aspects of the present disclosure.

Reference throughout the specification to "foodstuff" includes materials that can be used as food or to prepare food or drink. The term "foodstuff" should not be construed narrowly to limit a foodstuff solely to plant matter such as seeds, but rather, the term "foodstuff" is broadly construed to cover plant matter such as seeds and other edible foods and fluids.

Specific embodiments are described herein with reference to green coffee beans and nuts; however, the present disclosure and the reference to foodstuffs should not be limited to green coffee beans and nuts.

In the figures, identical reference numbers identify similar features or elements. The sizes and relative positions of the features in the figures are not necessarily drawn to scale.

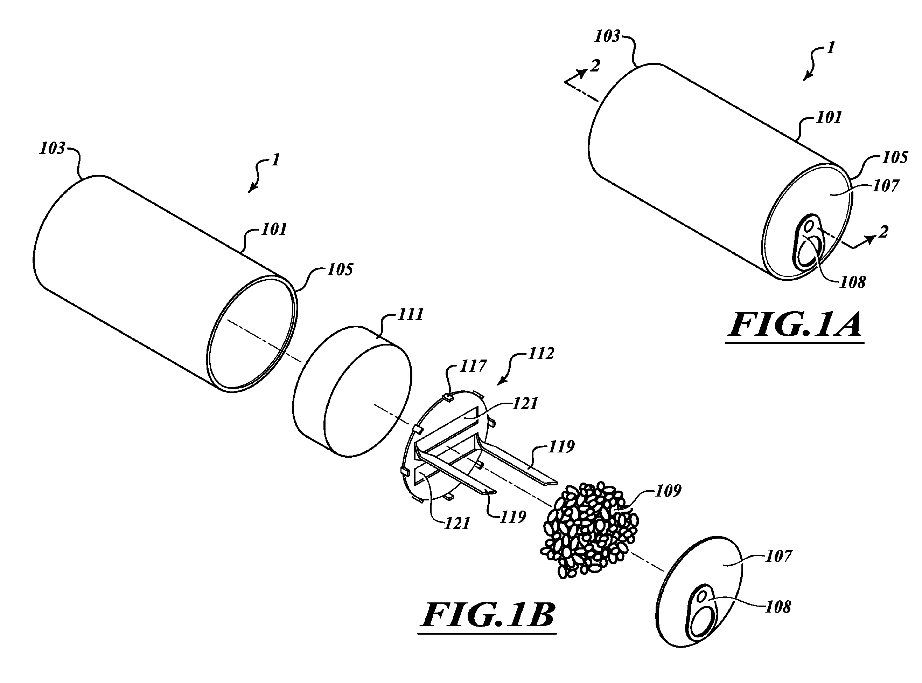

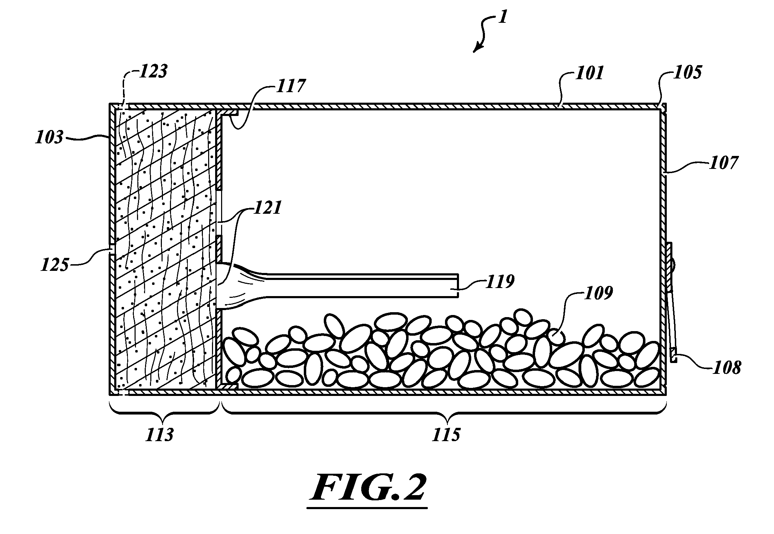

Referring to Figures 1A-1B and Figure 2, in accordance with an embodiment of the subject matter disclosed herein, a container 1 includes a container body 101 formed as a hollow cylinder. Container body 101 includes a first closed end 103 and a second closed end 105 opposite the first closed end. Second closed end 105 includes an easy open lid 107 similar to the type of lids that are present on containers for foods such as canned salmon, pudding and the like. Easy open lid 107 includes an open key 108 that provides a handle for "popping" the easy open lid 107 open and breaking the seal between easy open lid 107 and container body 101. Pulling on the open key 108 after "popping" it removes easy open lid 107 from the closed end 105. In the embodiment described herein, container 1 contains roasting media 109 in the form of green coffee beans. It should be understood that the reference to green coffee beans is illustrative only and that the present invention is not limited to green coffee beans. Suitable containers are capable of accepting up to 16 ounces of foodstuff or up to 20 ounces of a fluid beverage.

In an embodiment where the roasting media is green coffee beans, the green coffee beans are placed into container 1 prior to closing container 1, *e.g.,* by affixing the easy open lid to closed end 105. It should be understood that while an easy open lid is described in the embodiments disclosed herein, it is not required that an easy open lid be employed. For example, closed end 105 can be closed with a lid that requires a can opener to remove the lid. Once placed within the container, the containers are ready for distribution to end users. Because green coffee beans do not deteriorate significantly over time, exposure to air that enters the container through ports and vents within the container does not result in a change in the green coffee beans that adversely affects the quality of the roasted beans.

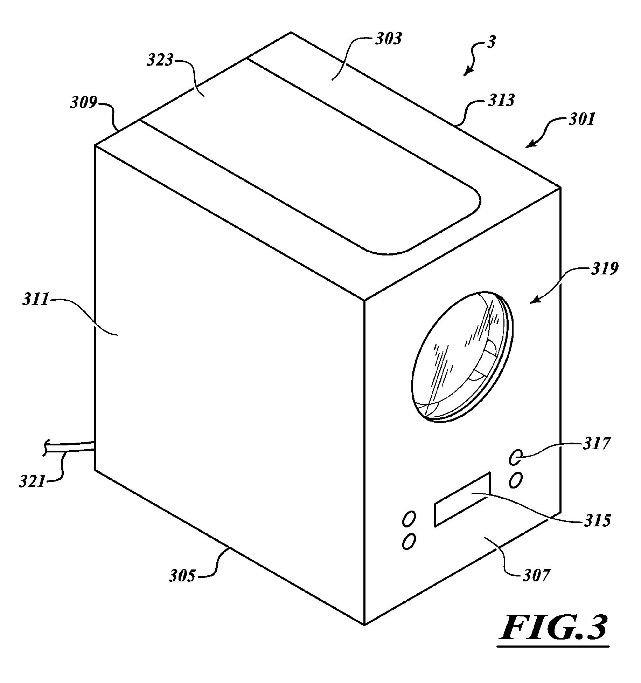

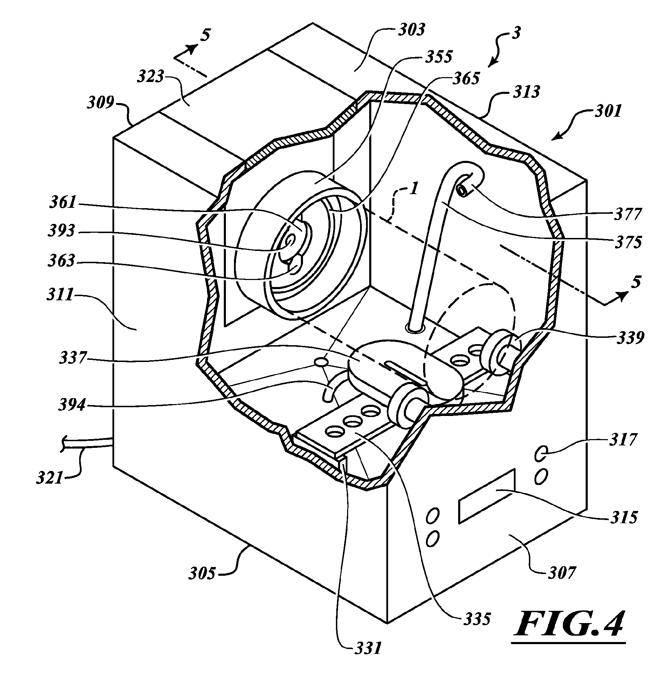

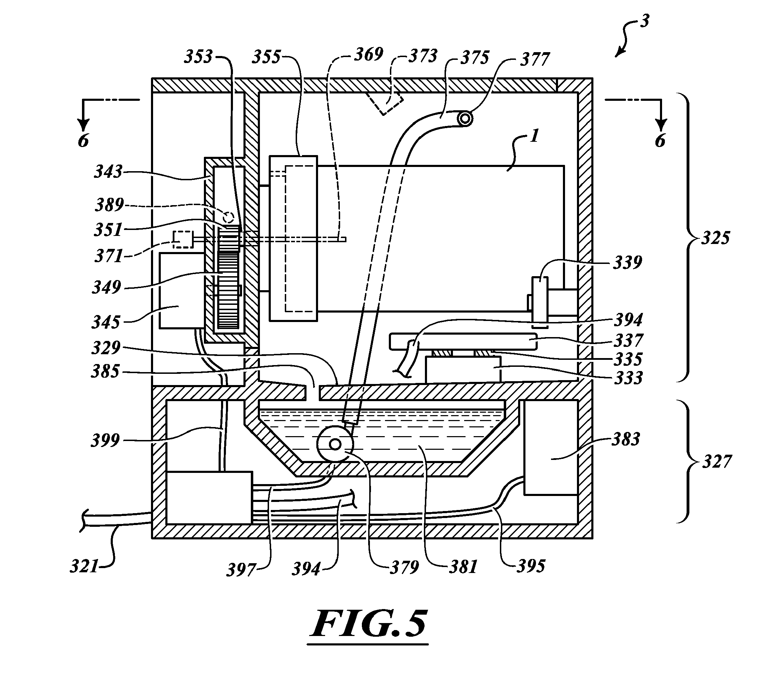

Container 1 including the green coffee beans is designed to be used in a roaster 3, one embodiment of which is shown in Figures 3-7. As best illustrated in Figures 4 and 5, container 1 is received within roaster 3 where container 1 is heated and the green coffee beans within container 1 are heated conductively and roasted. Further details of the roaster 1 are provided below.

Roaster 3 heats container 1 by induction heating. Induction heating involves a process of heating an electrically conducting object, usually a metal, by electromagnetic induction, whereby eddy currents are generated within the metal and resistance leads to Joule heating of the metal. An induction heater generally consists of an electromagnet, through which a high frequency alternating current is passed to generate the electromagnetic field that generates the eddy currents. Heat may also be generated by magnetic hysteresis losses in materials that have significant relative permeability. The frequency of the alternating current used depends upon the object size, material type, coupling between the induction coil and the object to be heated and the penetration depth. Exemplary frequencies for an alternating current range from 100 Hz to 3000 Hz. Induction heating allows the targeted heating of an applicable item. Iron and its alloys respond well to induction heating, due to their ferromagnetic nature. Eddy currents can, however, be generated in any conductor, including non-ferrous materials, and magnetic hysteresis can occur in any magnetic material. Generally, induction of non-ferrous materials requires higher frequencies and higher power levels compared to heating ferrous containing materials. Induction heating has been used for cooking through the inclusion of an induction coil in a cooktop. The induction coil induces a temperature increase in the iron base of cookware. The heat induced in the cookware base is transferred to food within the cookware via conduction. Benefits of induction heating include efficiency, safety arising from the fact that element that induces the temperature increase in the article to be heated is not heated itself, and speed.

Referring to Figure 1B and Figure 2, located within container body 101 between first closed end 103 and second closed end 105 adjacent first closed end 103 is filter media 111. Filter media 111 is formed from a material having an ignition temperature above the temperatures to which it will be exposed when the foodstuff within in the container is heated. For example, a suitable filter media should have an ignition temperature that is greater than about 451 degrees Fahrenheit, although filter media having an ignition point below 451 degree Fahrenheit would be suitable when heating the foodstuff does not result in temperatures of the container or within the container exceeding 451 degrees Fahrenheit. The filter media also has the ability to absorb and/or otherwise retain odor producing molecules and smoke produced when the temperature of roasting media 109 is increased. Exemplary materials for filter media 101 include cotton fibers, activated carbon, or combinations thereof. It should be understood that filter media in addition to cotton fibers and activated carbon can also be used. In the embodiment illustrated in Figure 1 B and 2, filter media 111 is sized to fill a portion of container 101 adjacent first closed end 103. Positioned within container 1 between filter media 111 and second closed end 105 is a bulkhead 112 that divides the interior of container body 101 into filtering section 113 occupied by filter media 111 and heating section 115 containing roasting media 109. Bulkhead 112 is disc-shaped and sized to fit snugly within the interior of container body 101. In the embodiment illustrated in Figures 1B and 2, bulkhead 112 has an outer diameter substantially equal to the inner diameter of container body 101. Positioned on the periphery of bulkhead 112 is a plurality of friction tabs 117 extending towards second closed end 105. Friction tabs 117 are biased in a radial direction away from the centerline C of container body 101. When bulkhead 112 is inserted into container 101 through second closed end 105, this radial bias of tabs 117 produces friction between the tabs and the inner surface of container 101. This friction helps to secure bulkhead 112 inside the container body by applying pressure to the inner surface of container body 101. While friction tabs 117 are shown in the illustrated embodiment as extending toward second closed end 105, alternatively tabs 117 can extend towards first open end 103 although this is less preferred when bulkhead 112 is inserted into container 101 through second closed end 105 because the tabs will resist the insertion.

In the illustrated embodiment, bulkhead 112 includes two agitation members 119 extending perpendicular to the surface of bulkhead 112 towards second closed end 105 in a direction that is parallel to the centerline C of container body 101. Agitation members 119 are rectangular members formed by die cutting two long edges and a short end extending between the long edges into bulkhead 112. The end of the agitation members 119 opposite the die cut short end serves as the connection point between bulkhead 112 and agitation members 119 and allows agitation members 119 to be bent to a position perpendicular to the surface of bulkhead 112. In the illustrated embodiment, two agitation members 119 are shown; however, it is understood that two agitation members are not required. Fewer agitation members or more agitation members can be provided. In addition, agitation members 119 need not be formed directly from bulkhead 112, they can be provided in other ways, such as welding or attaching independent members to the surface of bulkhead 112. As best illustrated in Figure 1B, agitation members 119 are rotated 45 degrees around their longitudinal center line. By rotating the agitation members in this manner, more surface area of the agitation members is available to contact and agitate the roasting media during the roasting process. Agitation members 119 are designed to cause the beans to tumble and turn over (as opposed to sliding along the surface of the container without turning over) during the roasting process.

Though not illustrated in Figures 1B and 2, container 1 can be provided with movable agitation members (this is in contrast to the stationary agitation members 119 shown in Figures 1B and 2). Movable agitation members would be mounted to a disc-shaped base connected to a drive shaft for rotating the base while the container remains stationary. The disc-shaped base and movable agitation members would be provided in the heating section of container 1.

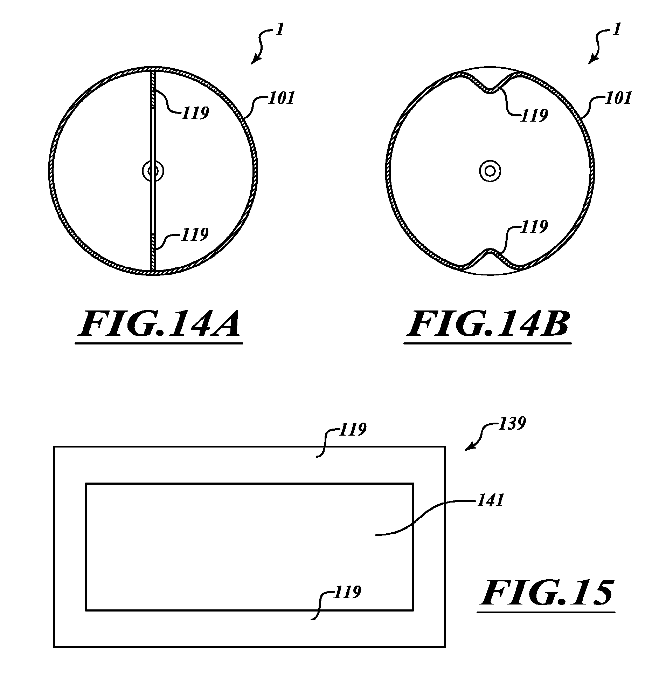

Referring to Figure 14A, in an alternative embodiment, container 1 is provided with agitation members 119 that are press-fit within container body 101. Press-fit agitation members 119 are provided by a plate 139 best shown in Figure 15. Plate 139 is rectangular shaped and has a center rectangular portion 141 removed. The width of plate 139 as measured from the outside edges of opposing agitation members 119 is substantially equal to the inner diameter of container body 101 such that when plate 139 is inserted into container body 101, it is retained therein by friction between the outer edges of plate 139 and the inner surface of container body 101.

In yet another embodiment, referring to Figure 14B, container 1 includes agitation members 119 that are press-formed into container body 101. In the embodiment illustrated in Figure 14A, agitation members 119 are formed by press-forming them into the wall of container 1. In Figure 14B, agitation members 119 are press-formed in the shape of triangular members extending into container body 101 and located 180° from each other. In alternative embodiments, fewer or more agitation members 119 can be provided, they may be of shapes different than triangles, and they may be located at positions other than 180° from each other.

In the embodiment shown in Figure 1B and 2, the openings in bulkhead 112 that remain after agitation members 119 are bent into position define gas vents 121 through which gas produced during the roasting process can pass through bulkhead 112 and into filter media 111. As illustrated in Figure 2, additional vents 123 are provided in container body 101 adjacent first closed end 103. In addition, a port 125 is provided in the first closed end 103. Both vents 123 and port 125 provide passages through which gas that has passed through filter media 111 can exit container 1. While specific embodiments of vents 123 and port 125 have been illustrated, it should be understood that vents 123 and/or port 125 can be provided in different locations, be of different sizes, and even be omitted.

Continuing to refer to Figure 2, heating section 115 defined between bulkhead 112 and closed end 105 contains roasting media 109. Roasting media includes plant matter, such as plant seeds including nuts and green coffee beans. In addition, roasting media can be foodstuffs other than nuts and green coffee beans, which are not roasted, but rather are heated utilizing the container and system of the embodiments described herein. When the foodstuffs are not plant seeds to be roasted, the container may or may not include the filter media 111, bulkhead 112, agitation members 119, vents 123, and port 125.

Gas vents 121 in addition to permitting gas to flow from heating section 115 through bulkhead 112 into filtering section 113 also serve as a collector for particles that are generated during the roasting process. For example, when green coffee beans are roasted, the outer husk of the coffee bean cracks and falls off the coffee bean. These husks are often referred to as chaff. This chaff can pass through bulkhead 112 and into filtering section 113 where it is captured.

Container 1 including container body 101, first closed end 103, second closed end 105 and bulkhead 112 can be formed from any material capable of being heated inductively. Such materials include iron or iron containing alloys, such as uncoated steel with a low tin content and other ferromagnetic materials. Electrically conductive non-ferrous materials, such as aluminum, can also be inductively heated. The particular thickness of the walls of container body 101, first closed end 103 and second closed end 105 is chosen so that effective heating of the container is achieved using the chosen inductive coil. The specific wall thickness of the components of the container will vary depending on the production technique used, heating effect desired from the application of the magnetic field, and the material used. A specific example of a suitable thickness is about 0.4 inches or thinner. An exemplary embodiment of a system for heating the contents of container 1 is described below with reference to Figures 3-7.

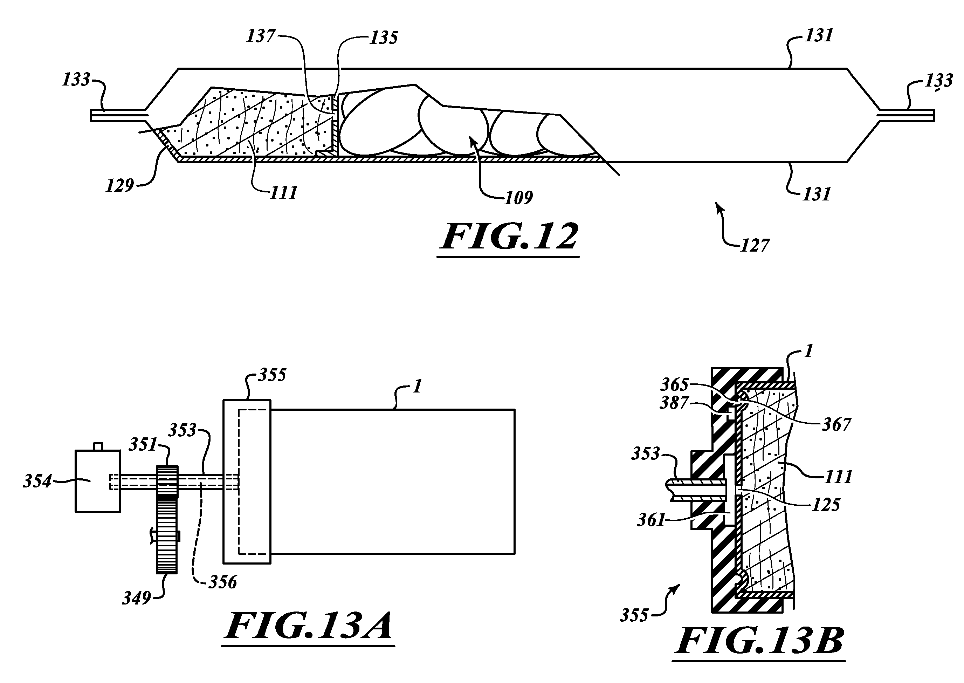

In another embodiment illustrated in Figure 12 the foodstuff is contained in a pouch 127 during heating. In the illustrated embodiment, pouch 127 includes two opposing sidewalls 131 of a hollow cylindrical member joined at opposing ends 133 to form a hollow pouch. Pouch 127 can also be formed from two separate sheets joined to each other around their periphery. Pouch 127 is divided into a filtering section and a heating section by a bulkhead 135 that extends between sidewalls 131. A filter media 111 is located in the filtering section and foodstuff, such as green coffee beans 109, is located in the heating section. Bulkhead 135 includes a vent 137 for allowing gases to pass from the heating section into the filtering section where it is contacts and passes through filter media 111. The filtering section is provided with vent 129 through which filtered gas may exit the filtering section. Pouch 127 can be made from a ferrous or non-ferrous material. Aluminum is one example of a non-ferrous material. When green coffee beans are the foodstuff, opening 127 has a diameter that is less than the diameter of the coffee beans so the coffee beans cannot pass through opening 127. As illustrated in Figure 12, the heating section containing the green coffee beans can be configured so that one layer of beans is arranged between opposing sidewalls 131 of pouch 127. With such an arrangement, the beans can be roasted evenly by thermal energy produced inductively as described below. When arranged in a single layer, more even roasting can be achieved without agitation of the beans. Arranging the beans in a single layer within the pouch can be achieved by forming pouch 127 around the beans using soft rollers or a vacuum. With the pouch embodiment, water cooling and acoustic sensing as described below can be utilized.

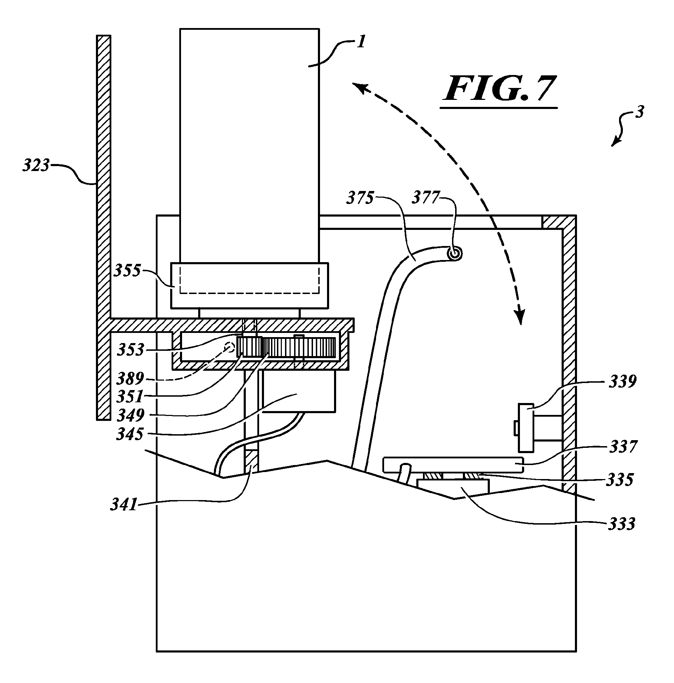

Figure 3 illustrates a roaster 3 in accordance with an embodiment of the subject matter described herein that includes a housing 301 having a top 303, an opposing bottom 305, a front 307 and an opposing rear 309. Housing 301 also includes a left side wall 311 and a right side wall 313. Front wall 307 includes a display 315 and a plurality of control switches 317. Front wall 307 also includes a viewing port 319 allowing a user to view the inside of roaster 3. Roaster 3 is provided with a power cord 321 for supplying power to electrically powered components of roaster 3. Top 303 of housing 301 includes a pivoting bulkhead 323 that is shown in a closed position in Figure 3 and an open position in Figure 7. The structural components of roaster 3 are made from materials that are water and heat resistant.

Referring in more detail to Figures 4, 5, 6 and 7, various components of roaster 3 contained within housing 301 are illustrated and described.

Referring to Figures 4 and 5, roaster 3 is roughly divided into a heating chamber 325 and a coolant containing chamber 327 positioned below heating chamber 325. Heating chamber 325 and coolant containing chamber 327 are separated by a heating chamber floor 329.

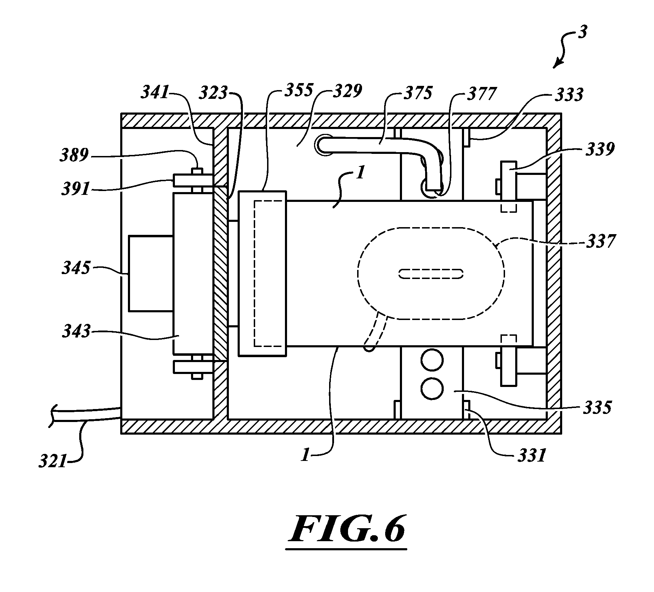

Residing on an upper surface of heating chamber floor 329 adjacent left side wall 311 is a left support leg 331 and adjacent right side wall 313 is a right support leg 333 (in Figure 6). Left support leg 331 and right support leg 333 extend upward from heating chamber floor 329 and support left and right edges of an inductor support 335 above heating chamber floor 329. Inductor support 335 is a rectangular member and supports on its upper surface an induction coil 337. Induction coil 337 is connected to an electric power source through inductor coil power line 394.

Positioned within the heating chamber 325 on the inner surface of front 307 of housing 301 is a pair of guide rollers 339. Guide rollers 339 are formed from a material that can withstand the temperatures to which container 1 is heated. Exemplary material includes silicone. Other suitable materials for guide rollers include glass, polytetrafluoroethylene, bronze, brass and aluminum. Guide rollers 339 are positioned equidistance to the left and right of induction coil 337 in a plane above induction coil 337. Guide rollers 339 are spaced apart a distance that is less than the outer diameter of the second closed end 105 of container 1 such that closed end 5 can be supported by guide rollers 339 when container 1 is positioned within roaster 3. The position of guide rollers 339 is also selected to that a desired air gap is provided between the container 1 and the upper surface of induction coil 337 when the bulkhead 323 is in the closed position.

Referring to Figures 5 and 6, roaster 3 is provided with an intermediate bulkhead 341 between front 307 and rear 309 of housing 301. Intermediate bulkhead 341 is closer to rear 309 as best illustrated in Figures 5 and 6. Intermediate bulkhead 341 extends between top 303 of housing 301 and heating chamber floor 329 and also between left side wall 311 and right side wall 313. Intermediate bulkhead 341 includes pivoting bulkhead 323. Supported on the rear side of intermediate bulkhead 341 is a gear housing 343. To the rear of gear housing 343 is mounted a motor 345. Motor 345 is connected to a power source through motor power line 347. Motor 345 can be a fixed RPM alternating current or direct current motor or a variable RPM alternating current or direct current motor. Motor 345 includes a drive shaft that carries a first gear 349. First gear 349 mates with a second gear 351 that is carried by a drive shaft 353 passing through intermediate bulkhead 341 and supported therein by a bearing structure (not shown). Drive shaft 353 is connected to a cup-shaped receptacle 355 on the side of intermediate bulkhead 341 opposite motor 345. Receptacle 355 is sized so that it is capable of mating closely with the closed end 103 of container 1 so that container 1 can be securely seated within receptacle 355. To assist with retention of container 1 in receptacle 355, magnetic members (not shown) can be provided in or adjacent to receptacle 355. For example magnets can be embedded within receptacle 355 or magnets can be provided adjacent, but not embedded within the side of receptacle 355 opposite to the side of the receptacle that receives container 1. Receptacle 355 is formed from any material suitable for resisting the temperatures encountered during the roasting process. An exemplary material for receptacle 355 is silicone.

Referring to Figures 4 and 8-9, receptacle 355 includes circular base 359 and an upward extending receptacle wall 357 around the periphery of receptacle 355. The height and diameter of receptacle wall are configured to reversibly accept first closed end 103 of container 1. Receptacle base 359 includes a circular indentation 361 centered on the centerline C of receptacle 355. Indentation 361 communicates with port 125 of container 1 such that gas exiting port 125 can pass into indentation 361. Gas passing into indentation 361 is then passed through base 359 via conduits 363 that pass through receptacle base 359. In certain embodiments, the surface of receptacle base 359 that receives container 1 also includes a circumferential rib 365 designed to mate with a verification groove 367 provided in the closed end 103 of container 1 as described below in more detail.

In an alternative embodiment illustrated in Figure 13A and 13B, conduits 363 can be omitted. In this alternative embodiment, gas existing container 1 and collected in indentation 361 can be vented through a conduit 356 in a drive shaft 353. One end of drive shaft 353 is connected to receptacle 357 and the opposite end is attached to a filter element located outside the heating section. As shown in Figure 13A, drive shaft 353 is attached to second gear 351 which is driven by first gear 349 attached to a motor (not shown). Filter element contains filter media 111 capable of removing odor causing molecules and smoke from the gas exiting container 1.

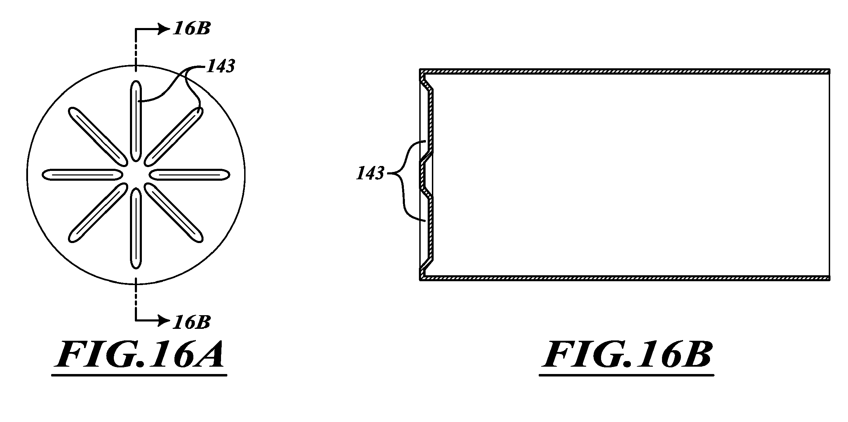

Another embodiment of a container is shown in Figures 16A and 16B. As shown in Figure 16A, the bottom of the container (1 in Figure 1) includes radially extending depressions or grooves 143 for receiving gas exiting the bottom of the container and providing a conduit for the gas to move away from the centerline of the container. An opening in the bottom of the container is not shown; however, it should be understood that a vent hole (similar to port 125 in Figure 2) is provided at some location in the bottom of the container such that gas passing through the vent hole can enter depressions 143. Though not shown, a receptacle (similar to receptacle 355 in Figure 13B) for receiving the container of Figure 16A can include ridges that match the size and shape of depressions 143. The matching size and shape of ridges and depressions 143 allows the ridges to seat themselves in the depressions. In certain embodiments the receptacle has at least one less ridge than the number of depressions in the bottom of the container. The receptacle can also be provided with passageways to receive gas from the depressions 143 and deliver the gas to the exterior of the receptacle. It should be understood that the depressions and ridges are not limited to the shapes shown in Figure 16A and 16B, for example, they need not be straight and they need not have a cross section that is rounded. For example, the cross-section of these elements can be square, triangular, rectangular or other shape.

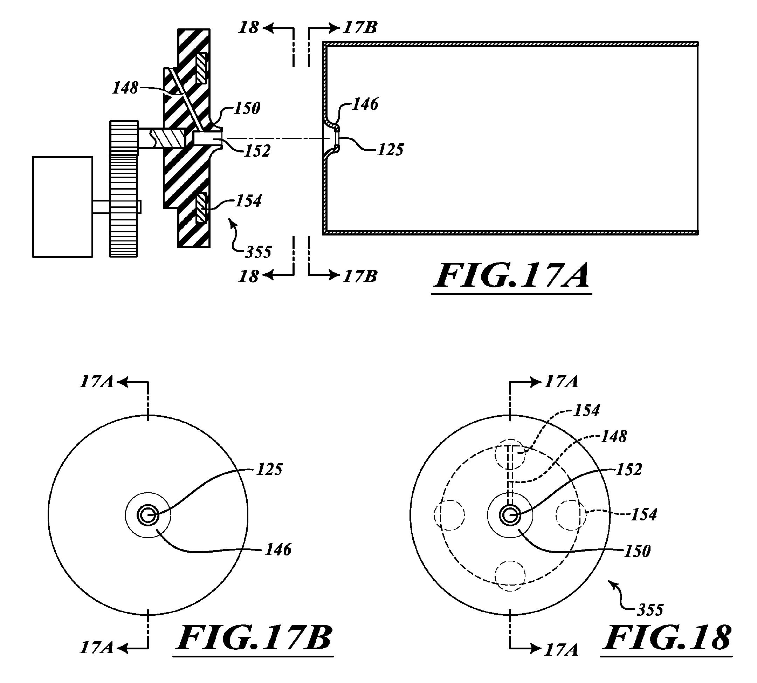

In yet another embodiment shown in Figures 17A, 17B, and 18 a container includes a fluted gas vent 146 formed in its bottom. In the illustrated embodiment, fluted gas vent is a depression in the bottom of the container. Centered in the fluted vent 146 is port 125 for allowing gas to escape the interior of the container. The container with the fluted gas vent 146 can be used in conjunction with a receptacle 355 that includes magnets 154 that serve to retain the container against receptacle 355. The surface of receptacle 355 facing the bottom of the container includes an exhaust conduit 152 that is surrounded by an exhaust conduit bevel 150. Exhaust conduit 152 is in fluid communication with an exhaust port that passes through receptacle 355 and provides a passage for venting gas through receptacle 355. In certain embodiments exhaust conduit bevel 150 has a shape that mirrors the shape of the fluted gas vent 146 so that fluted exhaust gas vent 146 can be seated on exhaust conduit bevel 150. In the illustrated embodiment the fluted gas vent and exhaust conduit bevel are shaped as cones. It should be understood that the fluted gas vent and exhaust conduit bevel are not limited to the shape shown in Figures 17A and 17B and can have different shapes, for example, in cross section the fluted gas vent and exhaust conduit bevel can be square, rectangular, triangular, star-shaped, or other shape.

Rotation of gear 349 by motor 345 causes gear 351 to rotate causing shaft 353 to rotate receptacle 355. When container 1 is positioned within receptacle 355, it rotates along with receptacle 355. When a magnetic field is formed by inductor coil 337, container 1 is inductively heated, causing its temperature to rise. Roasting media 109, such as green coffee beans within container 1 are then heated by conduction from wall of container 1.

Referring to Figure 5, roaster 3 may optionally include a temperature probe 369 for detecting the temperature inside container 1. Temperature probe 369 includes one end that can be positioned within container 1 when the container is received in receptacle 355 and an opposite end that includes a sensor 371 for detecting the temperature sensed by the probe. Drive shaft 353 can include a centrally located opening through which elongate temperature probe 369 is passed. Intermediate bulkhead 341 also includes a port through which temperature probe 369 can pass. Temperature probe 369 passes through port 125 in first closed end 103 of container 1. Alternatively, an infrared sensor 373 (in Figure 5) can be provided to detect the temperature of an outer surface of container 1. Such an infrared sensor can be positions on the underside of top 303 of housing 301 as shown in phantom lines in Figure 5.

Roaster 3 also includes a coolant tube 375 for delivering coolant fluid from coolant containing chamber 327 to a nozzle 377 that dispenses the coolant onto container 1. The end of coolant tube 375 opposite coolant nozzle 377 communicates with a coolant pump 379. Coolant pump 379 is located in a coolant reservoir 381 located beneath heating chamber floor 329. In the embodiment illustrated in Figure 5, coolant reservoir 381 is illustrated as a chamber that is isolated from the balance of coolant container chamber 327 so as to avoid various electrical power lines being immersed in the coolant fluid. It should be understood that in other embodiments, a smaller or larger portion of the coolant container chamber 327 can act as a coolant reservoir. Should this result in electrical lines being immersed in the coolant, the electrical lines should be waterproof.

Continuing to refer to Figure 5, coolant container chamber 327 also includes a housing 383 for a microprocessor, display, and switches.

Heating chamber floor 329 includes an orifice 385 through which coolant that has been dispensed onto container 1 in heating chamber 325 can return to coolant reservoir 381. In the illustrated embodiment, the upper surface of heating chamber floor 329 is canted so that fluid will flow to orifice 385. While the roaster embodiment illustrated in Figure 5 reuses the coolant, it should be understood that reuse of coolant is not required. For example, the roaster can be connected to a dedicated source of fresh coolant, such as a drinking water source.

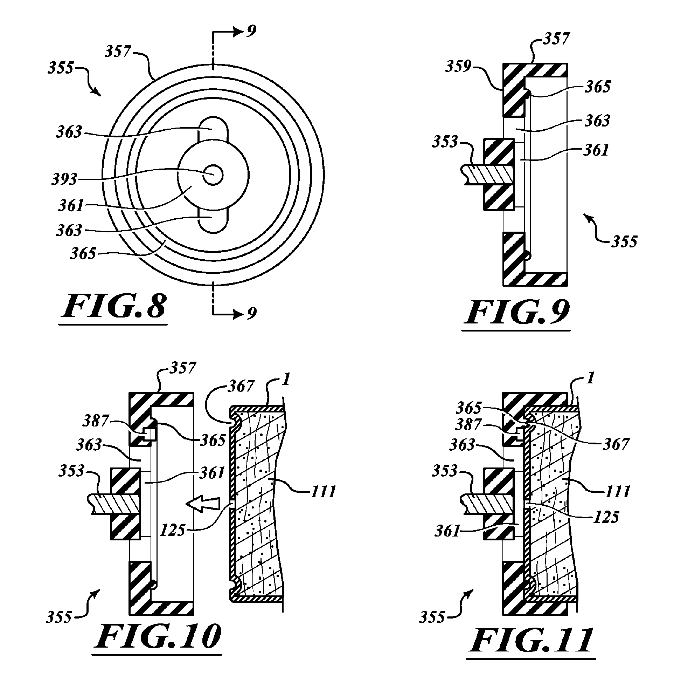

Roasters and containers of the embodiments described herein can include features that allow a user to verify that the container being used is designed for use with the roaster. Limiting the use of a roaster to authorized containers will reduce the likelihood of creating dangerous situations, such as excessive heating or inadequate venting of the container 1. Referring to Figures 10 and 11, one embodiment for verifying a container is designed for use with a particular roaster is to provide first closed end 103 of container 1 with a specific profile in cross-section and then form the negative image of such profile in the upper surface of receptacle base 359. For example, as illustrated in Figures 8-11, a rib 365 is provided in the upper surface of receptacle base 359. The rib is of a size and shape to that it mates with a verification groove 367 formed in the closed end 103 of container 1. Alternatively, the rib could protrude from the bottom of the container and a matching verification depression could be provided in the front surface of the receptacle. An alternative would be to provide receptacle 355 with a receptacle wall 357 having a uniquely shaped inner periphery that is reproduced on the closed end 103 of container 1. In yet another embodiment illustrated in Figures 10 and 11, the upper surface of receptacle base 359 further includes a retractable switch 387 embedded within it. Retractable switch 387 includes an extended position in which operation of the roaster is disabled and a retracted position in which operation of the roaster is enabled. The extended position is illustrated in Figure 10. Figure 11 illustrates the retracted position of retractable switch 387. Closed end 103 of container 1 includes and a flat surface that overlaps retractable switch 387 such that retractable switch forced into its retracted position when container 1 is positioned within receptacle 355. The flat surface in closed end 103 need not occupy an entire circumferential portion of closed end 103, but rather could occupy only a small portion of closed end 103. In this embodiment, container 1 would include a key designed to mate with a key receptacle in receptacle 355 so that the flat surface is aligned with the retractable switch. In these ways, use of container that is not designed to be utilized in a roaster of the embodiments described herein can be avoided along with the potential safety risks.. Other ways to avoid use of containers not designed for use with the disclosed roasters include barcodes or RFID tags.

The embodiments described herein are not limited to any specific type or shape of induction coils. For example, induction coil 337 can take different shapes including flat, round, square, semicircular, curved, toroidal to name a few. The preferred shape of the inductor coil is selected based on the container shape to optimize the inductive heating of the container. Suitable coils include coils capable of operating at frequencies ranging from about 100 Hz to 3000 Hz.

For the pouch embodiment shown in Figure 12, located facing both sides of the pouch can be used to inductively heat the pouch material. These coils could also be provided as a single coil in the shape of the letter U. In either case the pouch coils are positioned facing opposite sides of the pouch. When the pouch is made from a non-ferrous material such as aluminum, heating of the pouch may require using a power supply having a higher frequency and power level compared to a power supply needed to provide the same degree of heating when the container is made from a ferrous containing material, such as steel.

Roaster 3 can be provided with an acoustic sensor for detecting acoustic signals that occur during the roasting process. For example, an acoustic sensor can be used to detect the "first crack" and "second crack" well known to occur during the roasting of green coffee beans. Useful acoustic sensors include piezoelectric, fiber optic, and electromagnetic acoustic sensors and other well known types of sensors capable of detecting acoustic signals on the order of magnitude that would emanate from the first crack and second crack of roasting coffee beans. Such acoustic sensor would be controlled and communicate with microprocessor which would use the signal from the acoustic sensor to control the roasting process as described below in more detail.

Container 1 is placed into roaster 3 through pivoting bulkhead 323. Referring to Figures 5 and 7, pivoting bulkhead 323 is pivotally attached to intermediate bulkhead 341 through pivots 389. Pivots 389 are received in pivot supports 391 that extend in a rearward direction from the rear face of intermediate bulkhead 341. Cooperation between pivot supports 391 and pivots 389 allow pivoting bulkhead 323 to pivot from a closed position shown in Figures 3 and 4 to an open position shown in Figure 7. It is in the open position shown in Figure 7 that container 1 is placed into receptacle 355 prior to beginning the roasting process or is removed from receptacle 355 after the roasting process is complete. When a container 1 is placed within receptacle 355 the magnets associated with receptacle 355 serve to retain the container within the receptacle. When pivoting bulkhead 341 is closed, closed end 105 of container 1 rests on guide rollers 339 and container 1 is positioned above induction coil 337. Once in this position the roasting process is ready to begin.

In an embodiment where the roasting media is green coffee beans, the green coffee beans are placed into container 1 prior to closing container 1, *e.g.,* by affixing the easy open lid to closed end 105. It should be understood that while an easy open lid is described in the embodiments disclosed herein, it is not required that an easy open lid be employed. Once placed within the container, the containers are ready for distribution to end users. Because green coffee beans do not deteriorate significantly over time, the presence of the ports and vents within the container do not result in a change in the green coffee beans that will adversely affect the quality of the roast beans.

To begin the roasting process, the user selects a particular roasting profile that is desired by using the control switch and the display. The microprocessor is programmed with numerous predetermined profiles based upon a particular type of green coffee bean and/or the type of roast desired. For example, the microprocessor can control the power level of the magnetic field generated by the induction coil as well as a length of time that the magnetic field is applied to the container so that a desired time and temperature profile is achieved. Various combinations of time and temperature can be applied in order to achieve roasting that ranges from a light cinnamon roast to a dark Italian roast. The user's selection of a specific profile can be supplemented with information provided with the container. The suggested roast profiles provided with the container can be based on roasting carried out in roasters identical to the users and the results of cupping coffee brewed for the roasted beans. The suggested roasting profiles can also be published on company websites.

The microprocessor is also provided with environmental inputs such as altitude, electric line voltage, local humidity and other local conditions that could affect the power level of the magnetic field or the time and temperature needed to achieve a desired roast. These environmental inputs can be provided to the microprocessor from components known to detect these factors and produce signals representative of these factors. The microprocessor is programmed in a conventional manner to account for variations in these factors and adjust the time and power level of the roasting process to achieve the roast selected by the user.

Additional control of the roasting process can be achieved by utilizing signals received from the acoustic sensor described above. For example, when signals from the acoustic sensor represent the first crack of the coffee beans during the roasting process the actual time to the detected first crack can be compared to a predicted time to first crack for a specific roast profile and necessary adjustments made in the roasting time and magnetic field power so that the selected roast is achieved. By way of specific example, if a particular roast profile chosen by the user indicates that the first crack should occur at 120,000 milliseconds and an audible signal indicative of the first crack is not detected after 120,000 milliseconds, the microprocessor can control the power source to extend the time at a given power level and/or increase the power level. This ramp up in time and/or power level will increase as the difference in the time variance between the expected first crack and the actual first crack point increases until such point that the variance exceeds a predetermined value at which time the system will go into a safety mode shutdown because it is possible that the container or unit may be operating defectively. Alternatively, if an audible signal for the first crack is detected before the expected first crack event, the microprocessor shifts the power supply to a lower power level and/or shorter time. The microprocessor can be programmed to carry out a similar adjustment in power level and time based on detection of an acoustic signal corresponding to the second crack and its relation to an expected time for the second crack.

Acoustic signals from the roasting process can be used in yet another manner. For example, coffee beans as they roast change density, and thereby the acoustic signal that is generated as the coffee beans are agitated and fall within the metal container will change as the bean density changes. This ongoing acoustic event can be utilized alone or can be coupled with the acoustic signals corresponding to the first and second crack to add an additional level of control of the roasting process. By utilizing the acoustic signals in the control system, more data points are available and a smoother feedback system for controlling the roasting profile can be achieved. High and low band pass filters can be used to identify singles and eliminate unwanted acoustic signals. Fast Fourier transforms can be used to filter out extraneous noise such as environmental background acoustic signals.

The microprocessor is also capable of controlling the speed at which the motor causes the container to rotate. Varying the speed of rotation and the frequency of stopping the rotation will affect the roast profile. For example, stopping rotation during the roasting will impart more energy into the beans that are in close contact with the portion of the container that is closest to the induction coil resulting in some beans being roasted more than others. This variation in degree of roasting will contribute to a wider flavor profile.

The various embodiments described above can be combined to provide further embodiments. All of the U.S. patents, U.S. patent application publications, U.S. patent applications, foreign patents, foreign patent applications and non-patent publications referred to in this specification and/or listed in the Application Data Sheet are incorporated herein by reference, in their entirety. Aspects of the embodiments can be modified, if necessary to employ concepts of the various patents, applications and publications to provide yet further embodiments.

These and other changes can be made to the embodiments in light of the above-detailed description.

## Claims

1. A container for storing a foodstuff prior to heating the foodstuff in the container (1), the container (1) comprising: a hollow body (101) including a first closed end (103) and a second closed end (105) opposite the first closed end (103); a filter media (111) within the body between the first closed end (103) and the second closed end (105); and an agitation member (119) within the body.

2. The container of claim 1, further comprising: a bulkhead (112) between the first closed end (103) and the second closed end (105), the bulkhead (112) separating the container (1) into a filtering section (113) containing the filter media (111) and a heating section containing the foodstuff.

3. A system for heating a container (1) containing a foodstuff, the system comprising: a housing; an induction coil (337) in the housing; a receptacle (355) within the housing configured to receive the container (1) and position the container (1) adjacent the induction coil (337); a source of coolant within the housing; and a motor (345) connected to the receptacle (355).

4. The system of claim 3, further comprising a guide roller (339) for supporting the container (1) when the container (1) is positioned adjacent the induction coil (337).

5. The system of claim 3, further comprising a pivoting bulkhead (323) between the motor (345) and the receptacle (355) and a drive shaft extending between the motor (345) and the receptacle (355), wherein the shaft passes through the pivoting bulkhead (112).

6. The system of claim 5, wherein the pivoting bulkhead (112) is configured to pivot between a closed position in which a container (1) received by the receptacle (355) is positioned adjacent the induction coil (337) and an open position wherein the container (1) received within the receptacle (355) is not positioned adjacent the induction coil (337).

7. The system of claim 3, wherein the receptacle (355) includes a recess through which gas from the container (1) can pass.

8. The system of claim 3, further comprising a retractable switch configured to extend and retract between an extended position and a retracted position, the retractable switch positioned in the receptacle (355).

9. The system of claim 3, further comprising a temperature probe configured to be inserted in the container (1) when the container (1) is received by the receptacle (355)

10. The system of claim 3, further comprising a control system for adjusting one or more of power supplied to the induction coil (337), time a power level of the induction coil (337) is maintained, and rotation speed of the container (1), based on a heating profile.

11. A method for distributing a foodstuff packaged in a container (1) to a customer, the method comprising: providing a container (1) for packaging the foodstuff, the container (1) comprising a hollow body (101) and including a closed end (103) and an open end opposite the closed end (103), a filter media (111) within the body between the closed end (103) and the open end; and a bulkhead (112) located between the filter media (111) and the open end, the bulkhead (112) carrying an agitation member (119) and separating the container (1) into a filtering section (113) containing the filter media (111) and a heating section; inserting the foodstuff into the container (1); attaching a lid to the open end; and distributing the container (1) to the customer.

12. A method of roasting seeds comprising: obtaining a container (1) containing seeds, the container (1) comprising a hollow body (101) and including a first closed end (103) and a second closed end (105) opposite the first closed end (103), a filter media (111) within the body between the first closed end (103) and the second closed end (105); and a bulkhead (112) located between the filter media (111) and the second closed end (105), the Bulkhead carrying an agitation member (119) and separating the container (1) into a filtering section (113) containing the filter media (111) and a heating section; and inductively heating the container (1) to raise the temperature of the container (1).

13. The method of claim 12, further comprising: detecting the temperature of the container (1) and controlling the temperature of the container (1) based on the detected temperature to obtain a desired degree of roasting of the seeds.

14. The method of claim 12, further comprising: passing gas formed during the roasting through the filter media (111).

15. The method of claim 12, further comprising rotating the container (1) during the step of inductively heating the container (1).

## Patentansprüche

1. Ein Behälter zum Lagern eines Nahrungsmittels vor dem Erhitzen des Nahrungsmittels in dem Behälter (1), wobei der Behälter (1) aufweist:
einen hohlen Körper (101) mit einem ersten geschlossenen Ende (103) und einem zweiten geschlossenen Ende (105) gegenüber dem ersten geschlossenen Ende (103); ein Filtermedium (111) innerhalb des Körpers zwischen dem ersten geschlossenen Ende (103) und dem zweiten geschlossenen Ende (105); und ein Rührteil (119) innerhalb des Körpers.

2. Behälter gemäß Anspruch 1, ferner aufweisend:
eine Trennwand (112) zwischen dem ersten geschlossenen Ende (103) und dem zweiten geschlossenen Ende (105), wobei die Trennwand (112) den Behälter (1) in einen das Filtermedium (111) aufweisenden Filterabschnitt (113) und einen das Nahrungsmittel aufweisenden Erhitzungsabschnitt teilt.

3. Ein System zum Erhitzen eines Behälters (1), welcher ein Nahrungsmittel aufweist, wobei das System aufweist:
ein Gehäuse; eine Induktionsspule (337) in dem Gehäuse; ein Gefäß (355) in dem Gehäuse, welches ausgebildet ist, den Behälter (1) aufzunehmen und den Behälter (1) benachbart zu der Induktionsspule (337) anzuordnen; eine Kühlmittelquelle innerhalb des Gehäuses; und einen Motor (345), welcher mit dem Gefäß (355) verbunden ist.

4. System gemäß Anspruch 3, ferner aufweisend eine Führungsrolle (339) zum Stützen des Behälters (1), wenn der Behälter (1) benachbart zu der Induktionsspule (337) angeordnet ist.

5. System gemäß Anspruch 3, ferner aufweisend eine schwenkende Trennwand (323) zwischen dem Motor (345) und dem Gefäß (355) und eine Antriebswelle, welche sich zwischen dem Motor (345) und dem Gefäß (355) erstreckt, wobei die Welle durch die schwenkende Trennwand (112) verläuft.

6. System gemäß Anspruch 5, wobei die schwenkende Trennwand (112) ausgebildet ist zum Schwenken zwischen einer geschlossenen Stellung, in der ein von dem Gefäß (355) aufgenommener Behälter (1) benachbart zu der Induktionsspule (337) angeordnet ist, und einer offenen Stellung, in der der von dem Gefäß (355) aufgenommene Behälter (1) nicht benachbart zu der Induktionsspule (337) angeordnet ist.

7. System gemäß Anspruch 3, wobei das Gefäß (355) eine Aussparung aufweist, durch die Gas von dem Behälter (1) strömen kann.

8. System gemäß Anspruch 3, ferner aufweisend einen einschiebbaren Schalter, der ausgebildet ist zum Ausziehen und Einschieben zwischen einer ausgezogenen und einer eingeschobenen Stellung, wobei der einschiebbare Schalter in dem Gefäß (355) angeordnet ist.

9. System gemäß Anspruch 3, ferner aufweisend einen Temperaturfühler, der ausgebildet ist zum Einführen in den Behälter (1), wenn der Behälter (1) von dem Gefäß (355) aufgenommen wird.

10. System gemäß Anspruch 3, ferner aufweisend ein Steuersystem zum Anpassen einer oder mehrerer von Energie, die an der Induktionsspule (337) bereitgestellt wird, zum Anpassen einer Zeit, in der ein Energieniveau der Induktionsspule (337) aufrechterhalten wird, und Anpassen einer Rotationsgeschwindigkeit des Behälters (1), basierend auf einem Erhitzungs-Profil.

11. Verfahren zum Vertreiben eines in einem Behälter (1) verpackten Nahrungsmittels an einen Kunden, wobei das Verfahren aufweist:
Bereitstellen eines Behälters (1) zum Verpacken des Nahrungsmittels, wobei der Behälter (1) einen hohlen Körper (101) aufweist, ein geschlossenes Ende (103) und ein offenes Ende gegenüber dem geschlossenen Ende (103), ein Filtermedium (111) innerhalb des Körpers zwischen dem geschlossenen Ende (103) und dem offenen Ende; und eine Trennwand (112), die zwischen dem Filtermedium (111) und dem offenen Ende angeordnet ist, wobei die Trennwand (112) ein Rührteil (119) trägt und
den Behälter (1) in einen Filterabschnitt (113), welcher das Filtermedium (111) aufweist und einen Erhitzungsabschnitt teilt; Einführen des Nahrungsmittels in den Behälter (1);
Befestigen eines Deckels an dem offenen Ende; Vertreiben des Behälters (1) an den Kunden.

12. Verfahren zum Rösten von Samen aufweisend:
Bereitstellen eines Behälters (1), der Samen enthält, wobei der Behälter (1) einen hohlen Körper (101) aufweist mit einem ersten geschlossenen Ende (103) und einem zweiten geschlossenen Ende (105) gegenüber dem ersten geschlossenen Ende (103);
ein Filtermedium (111) innerhalb des Körpers zwischen dem ersten geschlossenen Ende (103) und dem zweiten geschlossenen Ende (105); und eine Trennwand (112), welche zwischen dem Filtermedium (111) und dem zweiten geschlossenen Ende (105) angeordnet ist, wobei die Trennwand ein Rührteil (119) trägt und den Behälter (1) in einen Filterabschnitt (113), welcher das Filtermedium (111) aufweist, und einen Erhitzungsabschnitt teilt; und induktives Erhitzen des Behälters (1) zum Erhöhen der Temperatur des Behälters (1).

13. Verfahren gemäß Anspruch 12, ferner aufweisend:
Detektieren der Temperatur des Behälters (1) und Steuern der Temperatur des Behälters (1) basierend auf der detektierten Temperatur zum Erreichen eines gewünschten Röstungsgrades der Samen.

14. Verfahren gemäß Anspruch 12, ferner aufweisend:
Leiten von während des Röstens gebildetem Gas durch das Filtermedium (111).

15. Verfahren gemäß Anspruch 12, ferner aufweisend Rotieren des Behälters (1) während des Schrittes des induktiven Erhitzens des Behälters (1).

## Revendications

1. Contenant pour stocker un produit alimentaire avant de faire chauffer le produit alimentaire dans le contenant (1), le contenant (1) comprenant : un corps creux (101) comprenant une première extrémité fermée (103) et une seconde extrémité fermée (105) opposée à la première extrémité fermée (103) ; un milieu filtrant (111) à l'intérieur du corps entre la première extrémité fermée (103) et la seconde extrémité fermée (105) ; et un élément d'agitation (119) à l'intérieur du corps.

2. Contenant selon la revendication 1, comprenant en outre : une cloison (112) entre la première extrémité fermée (103) et la seconde extrémité fermée (105), la cloison (112) séparant le contenant (1) en une section de filtration (113) contenant le milieu filtrant (111) et en une section de chauffage contenant le produit alimentaire.

3. Système pour faire chauffer un contenant (1) contenant un produit alimentaire, le système comprenant : un boîtier ; une bobine d'induction (337) dans le boîtier ; un réceptacle (355) à l'intérieur du boîtier configuré pour recevoir le contenant (1) et positionner le contenant (1) de manière adjacente à la bobine d'induction (337) ; une source de réfrigérant à l'intérieur du boîtier ; et un moteur (345) raccordé au réceptacle (355).

4. Système selon la revendication 3, comprenant en outre un rouleau de guidage (339) pour supporter le contenant (1) lorsque le contenant (1) est positionné de manière adjacente à la bobine d'induction (337).

5. Système selon la revendication 3, comprenant en outre une cloison pivotante (323) entre le moteur (345) et le réceptacle (355) et un arbre d'entraînement s'étendant entre le moteur (345) et le réceptacle (355), dans lequel l'arbre passe à travers la cloison pivotante (112).

6. Système selon la revendication 5, dans lequel la cloison pivotante (112) est configurée pour pivoter entre une position fermée dans laquelle un contenant (1) reçu par le réceptacle (355) est positionné de manière adjacente à la bobine d'induction (337) et une position ouverte dans laquelle le contenant (1) reçu à l'intérieur du réceptacle (355) n'est pas positionné de manière adjacente à la bobine d'induction (337).

7. Système selon la revendication 3, dans lequel le réceptacle (355) comprend un évidement à travers lequel peut passer le gaz provenant du contenant (1).

8. Système selon la revendication 3, comprenant en outre un commutateur rétractable configuré pour s'étendre et se rétracter entre une position étendue et une position rétractée, le commutateur rétractable étant positionné dans le réceptacle (355).

9. Système selon la revendication 3, comprenant en outre une sonde de température configurée pour être insérée dans le contenant (1) lorsque le contenant (1) est reçu par le réceptacle (355).

10. Système selon la revendication 3, comprenant en outre un système de commande pour ajuster un ou plusieurs éléments parmi l'énergie fournie à la bobine d'induction (337), le temps pendant lequel un niveau de puissance de la bobine d'induction (337) est maintenu, et la vitesse de rotation du contenant (1), en fonction d'un profil de chauffage.

11. Procédé pour distribuer un produit alimentaire conditionné dans un contenant (1) à un client, le procédé comprenant les étapes consistant à : prévoir un contenant (1) pour conditionner le produit alimentaire, le contenant (1) comprenant un corps creux (101) et comprenant une extrémité fermée (103) et une extrémité ouverte opposée à l'extrémité fermée (103), un milieu filtrant (111) à l'intérieur du corps entre l'extrémité fermée (103) et l'extrémité ouverte ; et une cloison (112) positionnée entre le milieu filtrant (111) et l'extrémité ouverte, la cloison (112) portant un élément d'agitation (119) et séparant le contenant (1) en une section de filtration (113) contenant le milieu filtrant (111) et en une section de chauffage ; insérer le produit alimentaire dans le contenant (1) ; fixer un couvercle sur l'extrémité ouverte ; et distribuer le contenant (1) au client.

12. Procédé pour torréfier des graines comprenant les étapes consistant à :
obtenir un contenant (1) contenant les graines, le contenant (1) comprenant un corps creux (101) et comprenant une première extrémité fermée (103) et une seconde extrémité fermée (105) opposée à la première extrémité fermée (103), un milieu filtrant (111) à l'intérieur du corps entre la première extrémité fermée (103) et la seconde extrémité fermée (105) ; et une cloison (112) positionnée entre le milieu filtrant (111) et la seconde extrémité fermée (105), la cloison portant un élément d'agitation (119) et séparant le contenant (1) en une section de filtration (113) contenant le milieu filtrant (111) et en une section de chauffage ; et chauffer par induction le contenant (1) pour faire monter la température du contenant (1).

13. Procédé selon la revendication 12, comprenant en outre les étapes consistant à : détecter la température du contenant (1) et réguler la température du contenant (1) en fonction de la température détectée pour obtenir un degré souhaité de torréfaction des graines.

14. Procédé selon la revendication 12, comprenant en outre l'étape consistant à faire passer du gaz formé pendant la torréfaction par le milieu filtrant (111).

15. Procédé selon la revendication 12, comprenant en outre l'étape consistant à faire tourner le contenant (1) pendant l'étape consistant à chauffer le contenant (1) par induction.
